# EUROPÄISCHE PATENTSCHRIFT

(11) **EP 1 362 055 B1**
(45) Veröffentlichungstag und Bekanntmachung des Hinweises auf die Patenterteilung: **08.09.2004**
(21) Anmeldenummer: 02719777.1
(22) Anmeldetag: 07.02.2002
(51) Int. Cl.: C07F 7/00, C08F 10/00

(54) **KOMPLEXVERBINDUNGEN UND IHRE VERWENDUNG ZUR POLYMERISATION VON OLEFINEN**
COORDINATION COMPOUNDS AND THEIR USE FOR THE POLYMERIZATION OF OLEFINS
COMPOSES COMPLEXES ET LEUR UTILISATION POUR LA POLYMERISATION D'OLEFINES

(30) Priorität: 13.02.2001 DE 10107043
(43) Veröffentlichungstag der Anmeldung: 19.11.2003
(73) Patentinhaber: BASF AKTIENGESELLSCHAFT, 67056 Ludwigshafen (DE)
(72) Erfinder: KRISTEN, Marc, Oliver, 67117 Limburgerhof (DE); BILDSTEIN, Benno, A-6020 Innsbruck (AT); KRAJETE, Alexander, A-5020 Salzburg (AT)
(86) Internationale Anmeldenummer: PCT/EP2002/001256
(87) Internationale Veröffentlichungsnummer: WO 2002/064602

(56) Entgegenhaltungen:
- US-A- 3 997 471

## Beschreibung

Die vorliegende Erfindung betrifft Komplexverbindungen der allgemeinen Formel I a bis I b, 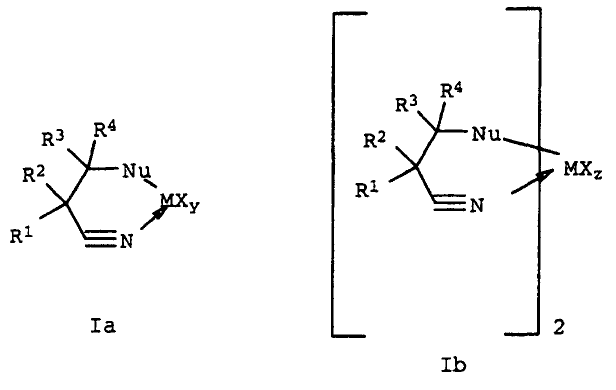 bei denen die Variablen wir folgt definiert sind:
- M: ausgewählt aus Ti, Zr, Hf, V, Nb oder Ta;
- y: entspricht der Oxidationsstufe von M abzüglich 1;
- z: entspricht der Oxidationsstufe von M abzüglich 2;
- Nu: ausgewählt aus O, S oder N-R⁵;
- X: gleich oder verschieden und ausgewählt aus Halogen, C₁-C₈-Alkyl, C₃-C₁₂-Cycloalkyl, C₇-C₁₃-Aralkyl oder C₆-C₁₄-aryl,
- R¹ bis R⁵: gleich oder verschieden und ausgewählt aus Wasserstoff,
C₁-C₁₈-Alkyl, substituiert oder unsubstituiert,
C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁶R⁷R⁸ oder O-SiR⁶R⁷R⁸;
fünf- bis sechsgliedrigen stickstoffhaltigen Heteroarylresten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁶R⁷R⁸ oder O-SiR⁶R⁷R⁸;
wobei räumlich benachbarte Reste R¹ bis R⁵ miteinander zu einem 5-bis 12-gliedrigen Ring verbunden sein können, der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl oder C₆-C₁₄-Aryl;
R⁶ bis R⁸ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

Weiterhin betrifft die vorliegende Erfindung ein verfahren zur Polymerisation von Olefinen unter Verwendung von Komplexverbindungen der allgemeinen Formel I a oder I b.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger *et al., Angew. Chem.* **1995**, *107*, 1255) auch Ni oder Pd (WO 96/23010) oder Fe und Co (z.B. WO 98/27124) genauer untersucht worden sind. Die Komplexe von Ni, Pd, Fe und Co werden auch als Komplexe später Übergangsmetalle bezeichnet.

Metallocenkatalysatoren haben für den großtechnischen Einsatz Nachteile. Die am häufigsten verwendeten Metallocene, das sind Zirkonocene und Hafnocene, sind hydrolyseempfindlich. Außerdem sind die meisten Metallocene empfindlich gegenüber einer Vielzahl von Katalysatorgiften wie beispielsweise Alkoholen, Ethern oder CO, was eine sorgfältige Reinigung der Monomeren bedingt.

Während Ni- oder Pd-Komplexe (WO 96/23010) die Bildung hochverzweigter, kommerziell wenig interessanter Polymere katalysieren, führt die Verwendung von Fe- oder Co-Komplexen zur Bildung von hochlinearem Polyethylen mit sehr geringen Anteilen an Comonomer.

In EP-A 0 874 005 werden weitere polymerisationsaktive Komplexe offengelegt. Es handelt sich bei den Komplexen bevorzugt um Ti-Komplexe mit Salicylaldiminliganden. Auch sie tragen Phenylsubstituenten oder substituierte Phenylsubstituenten am Aldimin-Stickstoffatom (Seite 18-23) , oder aber das Aldimin-Stickstoffatom ist in einen 6-gliedrigen Ring eingebaut (Seite 31-32). Sie erzeugen aber in der Regel niedermolekulare Polyethylene, die als Werkstoffe wenig geeignet sind. Weiterhin ist den in EP-A 0 874 005 offengelegten Liganden gemeinsam, dass das Sauerstoffatom ein Bestandteil phenolischer Systeme ist, was die Auswahl an leicht zugänglichen Ausgangsmaterialien einschränkt.

Aufgrund der großen kommerziellen Bedeutung von Polyolefinen ist die Suche nach möglichst vielseitigen polymerisationsaktiven Komplexen auch weiterhin von großer Bedeutung.

Wie G.J.P. Britovsek *et al.* in *Angew. Chem.* **1999**, *111,* 448 und *Angew. Chem. Int. Ed. Engl.* **1999**, *38*, 428 zeigen, ist aufgrund der großen kommerziellen Bedeutung von Polyolefinen die Suche nach möglichst vielseitigen polymerisationsaktiven Komplexen auch weiterhin von Bedeutung. Dabei haben Komplexe der sogenannten frühen Übergangsmetalle mit zweizähnigen Liganden besonderes Augenmerk erhalten, beispielsweise Komplexe der allgemeinen Formel A, 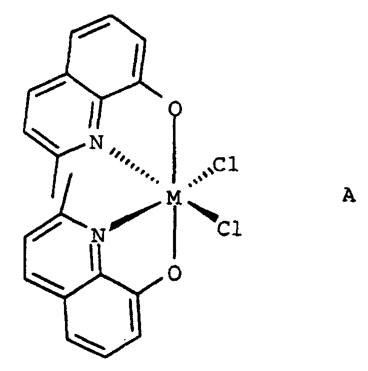 die von X. Bei *et al.* in *Organometallics* **1997**, *16*, 3282 untersucht wurden. Die Aktivitäten der Komplexe mit M = Ti oder Zr und bei der Ethylenpolymerisation waren jedoch zu gering, als dass die Komplexe kommerziell von Interesse sein könnten. T. Tsukahara *et al.* in *Organometallics* **1997**, *16*, 3303 und I. Kim *et al.* in *Organometallics* **1997**, *16*, 3314 haben β-Hydroxypyridylkomplexe der allgemeinen Formel B 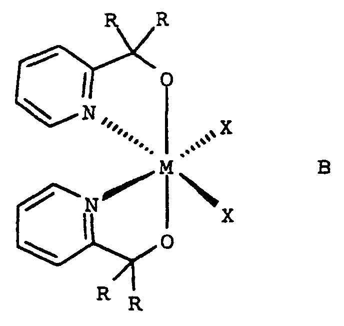 und ihre Aktivität bei der Ethylenpolymerisation untersucht. wählte man beispielsweise R aus CH₃ oder CF₃ und X aus Benzyl oder Neopentyl, so konnte bei Aktivierung mit Trispentafluorphenylboran keine oder nur äußerst geringe Polymerisationsaktivität gegenüber Ethylen beobachtet werden. Wählte man hingegen R = paratert.-Butylphenyl und X Benzyl, so wurde eine geringe Aktivität beobachten, die für kommerzielle Zwecke jedoch zu gering war. Die so hergestellten Polymere wiesen außerdem mit Mₙ = 6200 g ein für Werkstoffe zu niedriges Molekulargewicht auf.

Aus US 3,997,471 ist bekannt, dass in situ gebildete Komplexe aus β-Hydroxynitrilen und WCl₆ oder ihre homologen Molybdänanalogen in der Lage sind, nach Aktivierung mit verschiedenen Aluminiumalkylverbindungen wie beispielsweise Ethylaluminiumdichlorid oder Diethylaluminiumchlorid cyclische Olefine unter Ringöffnung zu polymerisieren.

Es bestand also die Aufgabe,
- neue Komplexverbindungen bereitzustellen, die zur Polymerisation von Olefinen zu hochmolekularen Polyolefinen geeignet sind;
- ein Verfahren zur Herstellung der erfindungsgemäßen Komplexverbindungen bereitzustellen;
- ein Verfahren zur Polymerisation oder Copolymerisation von Olefinen unter Verwendung der erfindungsgemäßen Komplexverbindungen bereitzustellen;
- Trägerkatalysatoren für die Polymerisation von Olefinen sowie ein Verfahren zur Herstellung der erfindungsgemäßen Trägerkatalysatoren unter Verwendung der erfindungsgemäßen Komplexverbindungen bereitzustellen;
- mit den erfindungsgemäßen Trägerkatalysatoren Olefine zu polymerisieren und zu copolymerisieren.

Überraschend wurde nun gefunden, dass die Aufgabe mit Hilfe Komplexverbindungen gelöst werden kann, die die eingangs definierten Strukturen der allgemeinen Formel I a oder I b aufweisen.
In Formel I sind die Variablen wie folgt definiert:
- Nu: ausgewählt aus O, S oder N-R⁵, wobei Sauerstoff bevorzugt ist;
- M: ausgewählt aus Ti, Zr, Hf, V, Nb oder Ta in der Wertigkeit von +3 bis +5; bevorzugt sind Ti oder Zr und besonders bevorzugt ist Zr;
- y: entspricht der Oxidationsstufe von M abzüglich 1,
- z: entspricht der Oxidationsstufe von M abzüglich 2, wobei es sich bei M um ein Metall in der höchsten Oxidationsstufe handeln kann, aber nicht handeln muss;
- X: gleich oder verschieden und ausgewählt aus
- Halogen, wie Fluor, Chlor, Brom oder Iod, bevorzugt sind Chlor oder Brom und besonders bevorzugt ist Chlor;
- C₁-C₈-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄=Alkyl wie Methyl, Ethyl, n-Propyl, iso-Propyl, n-Butyl, iso-Butyl, sec.-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, .3-Phenyl-butyl und 4-Phenyl-butyl, besonders bevorzugt Benzyl; oder
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Bevorzugt ist X Halogen.
R¹ bis R⁵ sind gleich oder verschieden und ausgewählt aus
- Wasserstoff,
- C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₈-Alkylgruppen seien beispielhaft genannt: β-Cyanoethyl oder ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₁₈-Alkylgruppen seien beispielhaft genannt: ein- oder mehrfach halogenierte C₁-C₁₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkenyl mit ein bis 4 isolierten oder konjugierten Doppelbindungen, beispielsweise vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁶R⁷R⁸, wobei R⁶ bis R⁸ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁶R⁷R⁸, wobei R⁶ bis R⁸ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Hutyldimethylsilyloxy-, tert.-Butyldiphenylsilyloxy-, Tribenzylsilyloxy-, Triphenylsilyloxyund die Tri-*para*-xylylsilyloxygruppe; besonders bevorzugt sind die Trimethylsilyloxygruppe und die tert.-Butyldimethylsilyloxygruppe;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₁₈-Alkylgruppen seien beispielhaft genannt: ein- oder mehrfach halogenierte C₁-C₁₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR⁶R⁷R⁸, wobei R⁶ bis R⁸ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁶R⁷R⁸, wobei R⁶ bis R⁸ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;

In einer bevorzugten Ausführungsform ist mindestens einer der Reste R¹ bis R⁴ ungleich Wasserstoff. In einer besonders bevorzugten Ausführungsform ist R² oder R³ ungleich wasserstoff.

In einer besonderen Ausführungsform können benachbarte Reste R¹ bis R⁵ der Komplexverbindungen der allgemeinen Formeln I a oder I b miteinander zu einem 5- bis 12-gliedrigen Ring verbunden sein. Beispielsweise können R¹ und R² zusammen sein: -(CH₂)₃- (Trimethylen), -(CH₂)₄- (Tetramethylen), -(CH₂)₅- (Pentamethylen), - (CH₂)₆- (Hexamethylen), -CH₂-CH=CH-, -CH₂-CH=CH-CH₂-, - CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit -Me = CH₃.

Die für das erfindungsgemäße Verfahren benötigten Komplexverbindungen sind in wenigen Stufen aus kommerziell erhältlichen Reagenzien erhältlich.

Zur Synthese der erfindungsgemäßen Komplexverbindungen der allgemeinen Formel I geht man im Allgemeinen von einem Liganden der allgemeinen Formel II aus, 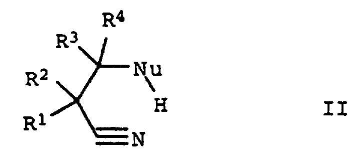 in dem die Variablen wie vorstehend definiert sind.

Die Liganden der allgemeinen Formel II werden zunächst mit Hilfe einer Base deprotoniert und anschließend mit Metallverbindungen der allgemeinen Formel MX_{y+1} umgesetzt.

Als Base können die in der Metallorganischen Chemie gängigen Metallalkyle verwendet werden wie beispielsweise Methyllithium, Ethyllithium, n-Butyllithium, sec-Butyllithium, tert.-Butyllithium oder Hexyllithium, weiterhin Grignard-Verbindungen wie beispielsweise Ethylmagnesiumbromid, weiterhin Lithiumamid, Natriumamid, Kaliumamid, Kaliumhydrid oder Lithiumdiisopropylamid ("LDA"). Als Lösemittel haben sich hochsiedende Lösemittel wie Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether.

Diese Deprotonierung ist im Allgemeinen nach einigen Stunden beendet, sinnvoll ist eine Reaktionsdauer von 2 bis 10 Stunden, bevorzugt sind 3 bis 5 Stunden. Die Temperaturbedingungen sind im Allgemeinen unkritisch, eine Durchführung bei Temperaturen von -90°C bis -20°C hat sich als bevorzugt erwiesen.

Der deprotonierte Ligand und die Metallverbindung der allgemeinen Formel MX_{y+1} werden anschließend miteinander umgesetzt.

Dabei können MX_{y+1} optional durch zusätzliche Neutralliganden stabilisiert werden. Als Neutralliganden bieten sich die gängigen Liganden der Komplexchemie an, wie beispielsweise cyclische und nichtcyclische Ether, Amine, Diamine, Nitrile, Isonitrile oder Phosphine. Besonders bevorzugt sind Diethylether, Tetrahydrofuran, 1,2-Dimethoxyethan, Tetramethylethylendiamin, Acetonitril oder Triphenylphosphan.

Die Bedingungen für die Umsetzung sind an sich unkritisch; üblicherweise mischt man den deprotonierten Liganden II und MX_{y+1} miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Wichtig ist, dass man die Umsetzung unter Ausschluss von Sauerstoff und Feuchtigkeit durchführt.

Als Molverhältnisse zwischen Ligand und M sind solche im Bereich von 5:1 bis 1:5 geeignet. Da jedoch die Liganden der allgemeinen Formel II die aufwändiger zugänglichen Reaktionspartner sind, sind Molverhältnisse Ligand : M im Bereich von 1:1 bis 1:3 bevor-. zugt, besonders bevorzugt sind stöchiometrische Mengen.

Wünscht man jedoch Verbindungen der allgemeinen Formel I b zu erhalten, so sind Molverhältnisse Ligand : M von 2:1 bis 4:1 bevorzugt.

Die Reinigung der erfindungsgemäßen Komplexverbindungen der allgemeinen Formel I a und I b gelingt durch die in der metallorganischen Chemie üblichen Methoden, wobei Kristallisation und Ausfällen besonders bevorzugt ist, weiterhin sind Filtrationen über Filterhilfsmittel wie beispielsweise Celite® geeignet.

Der deprotonierte Ligand und die Metallverbindung der allgemeinen Formeln MX_{y+1} werden anschließend miteinander umgesetzt.

Dabei kann MX_{y+1} optional durch Neutralliganden stabilisiert werden. Als Neutralliganden bieten sich die gängigen Liganden der Komplexchemie an, wie beispielsweise cyclische und nichtcyclische Ether, Amine, Diamine, Nitrile, Isonitrile oder Phosphine. Besonders bevorzugt sind Diethylether, Tetrahydrofuran, 1,2-Dimethoxyethan, Tetramethylethylendiamin, Acetonitril oder Triphenylphosphan.

Die Bedingungen für die Umsetzung sind an sich unkritisch; üblicherweise mischt man den deprotonierten Liganden II und MX_{y+1} miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Wichtig ist, dass man die Umsetzung unter Ausschluss von Sauerstoff und Feuchtigkeit durchführt.

Als Molverhältnisse zwischen Ligand und M sind solche im Bereich von 5:1 bis 1:5 geeignet. Da jedoch die Liganden der allgemeinen Formel II die aufwändiger zugänglichen Reaktionspartner sind, sind Molverhältnisse Ligand : M im Bereich von 1:1 bis 1:3 bevorzugt, besonders bevorzugt sind stöchiometrische Mengen.

Wünscht man jedoch Verbindungen der allgemeinen Formel I b zu erhalten, so sind Molverhältnisse Ligand : M von 2:1 bis 4:1 bevorzugt.

Die Reinigung der erfindungsgemäßen Komplexverbindungen der allgemeinen Formel I a und I b gelingt durch die in der metallorganischen Chemie üblichen Methoden, wobei Kristallisation und Ausfällen besonders bevorzugt ist, weiterhin sind Filtrationen über Filterhilfsmittel wie beispielsweise Celite® geeignet.

Die Herstellung der Liganden der allgemeinen Formel II ist beispielsweise in US 3,997,471 beschrieben. Die Herstellung gelingt vorteilhaft durch Deprotonierung eines Nitrils der allgemeinen Formel III, 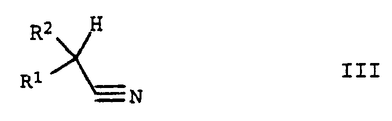 das ein acides α-H-Atom trägt, und anschließende Reaktion mit einer elektrophilen Verbindung der allgemeinen Formel IV, 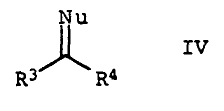 wobei in den Verbindungen III und IV die Variablen wie eingangs definiert sind.

Als Base können die in der Metallorganischen Chemie gängigen Metallalkyle verwendet werden wie beispielsweise Methyllithium, Ethyllithium, n-Butyllithium, sec-Butyllithium, tert.-Butyllithium oder Hexyllithium, weiterhin Grignard-Verbindungen wie beispielsweise Ethylmagnesiumbromid, weiterhin Lithiumamid, Natriumamid, Kaliumamid, Kaliumhydrid oder Lithiumdiisopropylamid ("LDA"). Als Lösemittel haben sich Lösemittel wie Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether.

Diese Deprotonierung ist im Allgemeinen nach einigen Minuten bis zu wenigen Stunden beendet, sinnvoll ist eine Reaktionsdauer von 30 Minuten bis 10 Stunden, bevorzugt sind 1 bis 5 Stunden. Die Temperaturbedingungen sind im Allgemeinen unkritisch, eine Durchführung bei Temperaturen von -90°C bis +30°C hat sich als bevorzugt erwiesen.

Das deprotonierte Nitril III und die elektrophile Verbindung IV werden anschließend miteinander umgesetzt.

Die Bedingungen für die Umsetzung sind an sich unkritisch; üblicherweise mischt man da deprotonierte Nitril III und die elektrophile Verbindung IV miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Wichtig ist, dass man die Umsetzung unter Ausschluss von Sauerstoff und Feuchtigkeit durchführt.

Als Molverhältnisse zwischen III und IV sind solche im Bereich von 5:1 bis 1:5 geeignet, bevorzugt sind Molverhältnisse III : IV im Bereich von 3:1 bis 1:3, besonders bevorzugt sind stöchiometrische Mengen.

Es wurde gefunden, dass die erfindungsgemäßen Komplexe der allgemeinen Formel I a oder I b geeignet sind, um Olefine zu polymerisieren. Besonders gut polymerisieren und copolymerisieren sie Ethylen und Propylen zu hochmolekularen Polymeren. Komplexe der allgemeinen Formel I b sind chiral, sie liefern bei der Polymerisation isotaktisches Polypropylen.

Damit die erfindungsgemäßen Komplexe der allgemeinen Formeln I a oder I b katalytisch aktiv sind, müssen sie aktiviert werden. Geeignete Aktivatoren sind ausgewählte Aluminium- oder Bor-Verbindungen mit elektronenziehenden Resten (z.B. Trispentafluorphenylboran, Trispentafluorphenylaluminium, *N,N*-Dimethylaniliniumtetrakis-pentafluorphenylborat, Tri-n-butylammonium-tetrakis-pentafluorphenylborat, *N,N*-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat) . Bevorzugt sind Dimethylanilinium-tetrakis-pentafluorphenylborat, Tritylium-tetrakispentafluorphenylborat sowie Trispentafluorphenylboran.

Verwendet man Bor- oder Aluminiumverbindungen als. Aktivatoren für die erfindungsgemäßen metallorganischen Verbindungen der allgemeinen Formel I a oder I b, so setzt man sie im Allgemeinen in einem molaren Verhältnis von 1 : 10 bis 10 : 1, bezogen auf M, ein; bevorzugt 1 : 2 bis 5 : 1 und besonders bevorzugt in stöchiometrischen Mengen.

Eine andere geeignete Klasse von Aktivatoren sind Aluminoxane. Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs V a und V b. Diese Gemische liegen vermutlich in einem dynamischen Gleichgewicht zueinander vor.

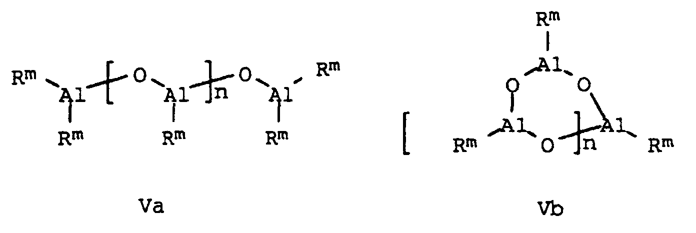

In Formel V a und V b sind die Reste R^{m} unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und n ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* **1996**, *15*, 2213-26; A.R. Barron *Macromol. Symp.* **1995**, 97, 15-25). Unabhängig davon, wie die Struktur der Aluminoxane tatsächlich aussieht, sind sie als Aktivatoren der erfindungsgemäßen Metallkomplexe der allgemeinen Formeln I a oder I b geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexverbindungen der allgemeinen Formel I a oder I b mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10.000, bevorzugt 1: 50 bis 1 : 1000 und besonders bevorzugt 1 : 100 bis 1 : 500.

Der gewählte Komplex der allgemeinen Formeln I a oder I bund der Aktivator bilden zusammen ein Katalysatorsystem.

Durch Zugabe von weiterem Aluminiumalkyl der allgemeinen Formel Al(R^{m})₃ oder Aluminoxanen kann die Aktivität des erfindungsgemäßen Katalysatorsystems erhöht werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75 bar oder Hochdruckbedingungen von 500 bis 2500 bar. Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine zu nennen: Ethylen, Propylen, 1-Buten, 1-Penten, 1-Hexen, 1-Octen, 1-Decen oder 1-Undecen, wobei Propylen und Ethylen bevorzugt und Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Es ist auch möglich, den erfindungsgemäßen Komplex der Formel I a oder I b in situ im Polymerisationsreaktor zu bilden, indem man den deprotonierten Liganden II und die Übergangsmetallverbindung MX_{y+1} im Polymerisationsreaktor vereinigt und - ohne I a oder I b zu isolieren - sofort mit einem der vorstehend aufgezählten Aktivatoren aktiviert. Auch durch dieses Verfahren lässt sich das erfindungsgemäße Katalysatorsystem erhalten.

Die erfindungsgemäßen Katalysatorsysteme polymerisieren Olefine zu Polyolefinen mit sehr hohem Molekulargewicht.

Die erfindungsgemäßen Katalysatorsysteme lassen sich bei der Polymerisation mit Wasserstoff regeln, d.h. durch Zugabe von Wasserstoff lässt sich das Molekulargewicht der durch das erfindungsgemäße Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Damit die erfindungsgemäßen Katalysatorsysteme in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brokken, Wandbeläge, Verstopfungen in Leitungen oder Wärmetauschern) kommen, die zum Abschalten der Anlage zwingen. Eine solche immobilisierte Komplexverbindung wird als Katalysator bezeichnet.

Die erfindungsgemäßen Katalysatorsysteme lassen sich auf festen Trägermaterialien abscheiden. Als Trägermaterialien kommen z.B. poröse Metalloxide von Metallen der Gruppen 2 bis 14 oder Mischungen derselben in Frage, weiterhin Schichtsilikate und Zeolithe. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol® 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen kann über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Eine chemische Vorbehandlung des Trägermaterials mit einer Alkylverbindung wie Aluminiumalkyl, Lithiumalkyl oder einem Alumoxan ist ebenfalls möglich.

weiterhin ist es möglich, die erfindungsgemäßen Komplexe der allgemeinen Formel I a oder I b *in situ* zu bilden und auf dem festen Trägermaterial abzuscheiden und danach den Aktivator ebenfalls auf dem Trägermaterial abscheiden. Wählt man eine solche Methode der Trägerung, so ist es bevorzugt, das feste Trägermaterial vor der Dotierung durch Ausheizen von Feuchtigkeitsspuren zu befreien.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingen. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C.

Als Monomer sind die folgenden Olefine zu nennen: Ethylen, Propylen, 1-Buten, 1-Penten, 1-Hexen, 1-Octen, 1-Decen oder 1-Undecen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Bei Wasserstoffzugabe steigt die Aktivität der erfindungsgemäßen Katalysatoren.
Die erfindungsgemäßen Katalysatoren können auch gemeinsam mit einem oder mehreren anderen, an sich bekannten Polymerisationskatalysatoren verwendet werden. So können sie zusammen mit
- Ziegler-Natta-Katalysatoren,
- geträgerten Metallocenkatalysatoren der übergangsmetalle der Gruppen 4 bis 6 des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.

Nachfolgende Arbeitsbeispiele erläutern die Erfindung.
Allgemeine Vorbemerkungen:
Alle Arbeiten wurden, wenn nicht anders beschrieben, unter Ausschluss von Luft und Feuchtigkeit unter Verwendung von Standard-Schlenk-Techniken hergestellt. Geräte und Chemikalien waren entsprechend vorbereitet. Die Polymerviskosität wurde nach ISO 1628-3 bestimmt.

### 1. Darstellung der Liganden: Allgemeine Arbeitsvorschrift am Beispiel des Liganden II.3

In ein ausgeheiztes und mit Argon gespültes Schlenkrohr wurden 0,18 ml Diisopropylamin (1,3 mmol) vorgelegt, in 10 ml THF (absolut) gelöst und bei - 80 °C mit n-BuLi (0,72 ml, 1,1 Äquivalente, 2.0 M Lösung in Pentan) versetzt. Nach Entfernen des Kältebades (EtOH, N₂) wurde die entstehende LDA-Lösung ½ h bei Raumtemperatur gerührt.
Cyclohexylnitril (0,144 g, 1,30 mmol) wurde der frisch hergestellten LDA-Lösung bei -80°C zugegeben. Nach Entfernung des Kältebades wurde das gelöste Edukt 2 h bei Raumtemperatur gerührt und dadurch deprotoniert (Farbwechsel: gelblich - gelbgrün). 0,24 g Benzophenon (1,3 mmol) wurden anschließend bei Raumtemperatur zugegeben und über Nacht gerührt.

Die gelbe THF-Lösung wurde dann auf 100 ml Eiswasser gegossen und 3 x mit je 25 ml Diethylether extrahiert. Die vereinigten organischen Phasen wurden mit H₂O gewaschen, über Na₂SO₄ getrocknet und die organischen Lösungsmittel am Rotavapor abgetrennt. Das gelbe Produkt kristallisierte innerhalb von 2 h aus. Anschließende Umkristallisation aus Essigester/Hexan lieferte das reine β-Hydroxynitril.

### Ligand II.1

Die Synthese dieses Liganden erfolgte nach der Literaturvorschrift von E. Kaiser *et al., J. Org. Chem.* **1968**, *33*, 3403. Die Daten stimmten mit den Literaturangaben überein.

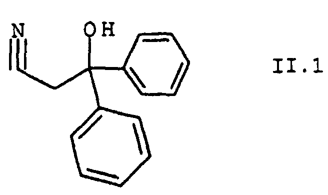

### Ligand II.2

Die Synthese dieses Liganden erfolgte nach der Literaturvorschrift von T. Cuvigny *et al., J. Organomet. Chem.* **1973**, *57*, C36-C38.

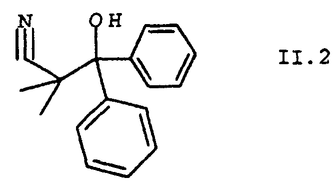

### Ligand II.3

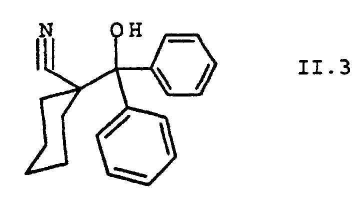

Ausbeute 59%, Summenformel C₂₀H₂₁NO, Schmp.: 179-180°C
¹H NMR (CDCl₃) : 1,11 - 1,17 (1H, m, CH₂), 1,61 - 1,79 (7H, m, CH₂), 2,04 - 2,08 (2H, m, CH₂), 2,67 (1H, s, OH), 7,29 - 7,67 (10H, m, Phenyl)
¹³C NMR (CDCl₃): 22,8 (CH₂), 25,0 (CH₂), 30,8 (CH₂), 47,2 (C-(CH₂)₂) , 80,5 (C-OH), 123,1, 127,5, 127,7, 127,8, 143,1 (C-Phenyl, CN)
IR (KBr, cm⁻¹): 3454 (s, broad), 3056 (w), 2966 (w), 2939 (w), 2921 (m), 2229 (m, CN), 1659 (w), 1600 (w), 1495 (m) , 1445 (vs), 1355 (m), 1341 (m), 1279 (w), 1189 (m), 1165 (s), 1052 (vs), 870 (m), 749 (s), 702 (vs), 637 (m)

### Ligand II.4

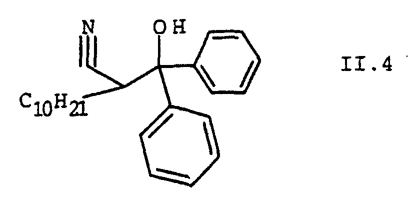

Ausbeute: 60 %, Summenformel: C₂₅H₃₃NO, Farbe: weiß; Schmp: 66 - 67 °C (Ethanol)
¹H NMR (CDCl₃): 0,93 (3H, t, CH₃), 1, 28 - 1,45 (17H, m, CH₂), 1,70 - 1,79 (2H, m), 3,02 (1H, s, C-OH), 7,26 - 7,58 (10H, m, Phenyl) ¹³C NMR (CDCl₃) : 14,1 (CH₃) , 22,6, 27,3, 27,6, 29, 0, 29,2, 29,3, 29,4, 29,5, 31,8 (CH₂), 43,1 (CH), 78,6 (C-OH), 120,6, 125,7, 125,8, 127,5, 127,9; 128,4, 128,5, 143,0, 144,3 (C-Phenyl, CN)
IR (KBr, cm⁻¹): 3355 (s, breit, OH), 3062 (w), 2952 (w), 2921 (m), .2871 (w), 2852 (m), 2263 (m, CN), 1495. (m), 1470 (m), 1449 (s) , 1262 (m), 1177 (m), 1057 (s), 893 (m), 753 (s), 747 (s), 697 (vs) MS: (LH+ - H₂O) = 346,3 m/z, L = Ligand

### Ligand 11.5

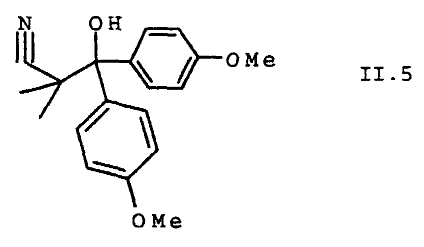

Ausbeute: 72 %, Summenformel: C₁₉H₂₁NO₃, Farbe: weiß; Schmp: 104,5 °C (Ethanol)
¹H NMR (CDCl₃): 1,46 (6H, s, 2 x CH₃), 2,88 (1H, s, OH), 3,90 (6H, s, 2 x CH₃-O-), 6.86 (4H, d, Phenyl (Ligand)), 7.53 (4H, d, Phenyl).

**Tabelle 1:**

| Übersicht über Liganden der Formel II | | | | | | |
|---|---|---|---|---|---|---|
| Komplex | R¹ | R² | R³ | R⁴ | R⁵ | Nu |
| II.1 | H | H | Ph | Ph | - | O |
| 11.2 | Me | Me | Ph | Ph | - | O |
| II . 3 | - (CH₂) ₅- | | Ph | Ph | - | O |
| II.4 | Me | Me | H | n-C₁₀H₂₁ | - | O |
| II.5 | Me | Me | p-An | p-An | - | O |
| II.6 | Me | Me | Ph | Ph | - | O |
| Abkürzungen: Me = CH₃, Ph = Phenyl, p-An: para-Aniysyl = para-Methoxyphenyl, -C₂H₄CN: β-Cyanoethyl. | | | | | | |

### 2. Synthese der Komplexverbindungen

In einem ausgeheizten und mit Argon gespülten Schlenkrohr wurde der Ligand II.1 (517 mg, 2,32 mmol) vorgelegt, in 20 ml THF (absolut) gelöst und bei - 80°C im Kältebad (EtOH, N₂) mittels n-BuLi (1,2 ml, 2,4 mmol, 2.0 M in Pentan) deprotoniert. Nach Entfernung des Kältebades wurde die Lösung bei Raumtemperatur 1 h gerührt (Farbwechsel: gelb - hellrot).

Nach Zugabe des Übergangsmetallhalogenids (ZrCl₄, 0,27g, 1,12 mmol, 0,5 Äquivalente) bei - 80 °C wurde die Lösung beim Anwärmen innerhalb von 1 h dunkelrot. Es wurde 18 h gerührt.

Das THF wurde anschließend im Hochvakuum abdestilliert, der orange oder braune Rückstand in Toluol suspendiert.

Das bei der Reaktion entstehende LiCl wurde aus der Suspension durch Filtration entfernt. Die Lösung wurde anschließend im Hochvakuum bis zur Trockne eingeengt, der Rückstand 3 x mit 10 ml Hexan (absolut) digeriert und gewaschen. Das Lösungsmittel wurde abgehebert, der pulvrige, orange Komplex I.b.1 im Hochvakuum getrocknet.

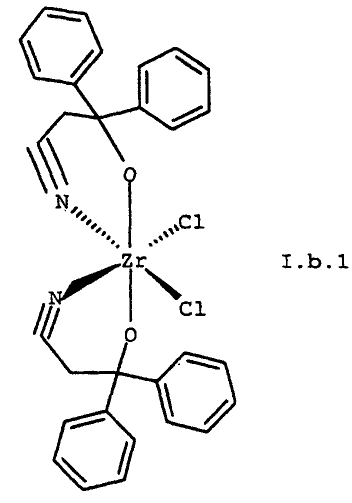

Ausbeute: 75 %, Summenformel: C₃₀H₂₄Cl₂N₂O₂Zr, Farbe: ziegelrot
¹H NMR (CD₂Cl₂): 1,29 (4H, s, 2 x CH₂), 7,09 - 7,49 (20H, m, aromatisch)

### Komplex I.a.1

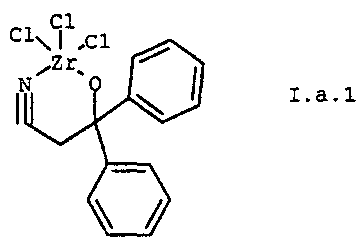

Abweichend von der allgemeinen Vorschrift, wurde der Rückstand nach Abdestillieren des THF mit CH₂Cl₂ und mit Hexan gewaschen.
Ausbeute: 61 %, Summenformel: C₁₅H₁₂Cl₃NOZr, Farbe: schmutziges orange
¹H NMR (CD₂Cl₂): 1,87 (8H, s, 4 x CH₂, 2 koordinierende THF), 3,81 (8H, s, 4 x CH₂-O, 2 koordinierende THF), 4,54, 7,08 - 7,48 (10H, m, aromatisch)

### Komplex I.a.2

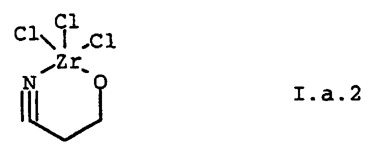

Ausbeute: 69 %, Summenformel: C₃H₄Cl₃NOZr, Farbe: gelbbeige
¹H NMR (CD₂Cl₂): 1,92 (2 x CH₂, 1 koordinierendes THF, breit), 2,88 (breit), 3,79 (4H, 2 x CH₂-O, 1 koordinierendes THF, breit), 4,50 (breit).

### Komplex I.a.3

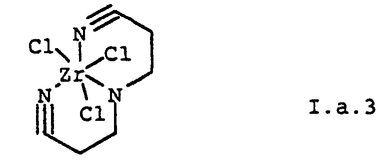

Ausbeute: 70 %, Summenformel: C₆H₈Cl₃N₃Zr, Farbe: zitronengelb Abweichend von der allgemeinen Vorschrift wurde der Komplex wie folgt gereinigt: Nach Abdestillieren des THF wurde der Komplex in CH₂Cl₂ suspendiert und auf eine kurze Celite®-Säule gegeben. Anschließend wurde er mit 50 ml Acetonitril eluiert.

### Komplex I.a.4

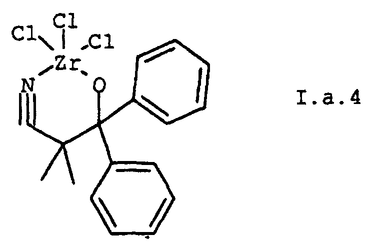

Ausbeute: 81 %, Summenformel: C₁₇H₁₆Cl₃NOZr, Farbe: weißgelb
¹H-NMR (CD₂Cl₂) : 1,64, 1,70 (6H, 2 x CH₃), 1,87 (8H, s, 4 x CH₂, 2 koordinierende THF), 3,75 (4H, s, 4 x CH₂-O, 2 koordinierende THF), 7,28 - 7,72 (10H, m, aromatisch)

### I.a.5

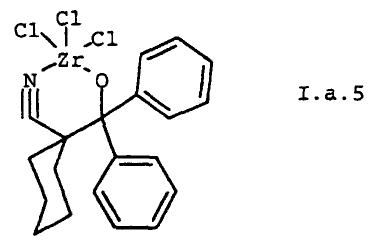

Ausbeute: 73 %, Summenformel.- C₂₀H₂₀Cl₃NOZr, Farbe: weißgelb
¹H-NMR (CD₂Cl₂): 0.86 - 1.88 (m, CH₂-Ligand und CH₂ aus koordinierenden THF-Molekülen), 3.76, 4.45 (s, CH₂-O, koordinierende THF-Moleküle), 7.09 - 7.73 (m, Phenyl)
13C NMR (CD₂Cl₂): 23,2, 23,5, 24,4, 24,9, 25,4, 25,8, 28,2, 48,6 (C-(CH₂)₂), 68,8 (O-CH₂, THF), 75,8, 76,4, 76.8 (C-O, Isomere), 127,1, 127,2, 127,7, 127,9, 128,0, 128,2, 128,7, 129,3 (C-Phenyl)

### I.a.6

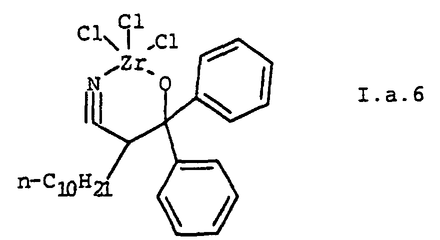

Ausbeute: 81 %, Summenformel: C₂₅H₃₂Cl₃NOZr, Farbe: schmutzig gelb ¹H-NMR (CD₂Cl₂) : 0,84 - 0,88 (m, CH₃) , 1,24 (s, CH₂), 1,84, 2,06 (8H, s, breit, 4 x CH₂, 2 koordinierende THF-Moleküle), 3,72, 4,44 (8H, s, breit, 4 x -O-CH₂, 2 koordinierende THF-Moleküle), 7,12 - 7,84 (10H, m, Phenyl)
¹³C-NMR (CD₂Cl₂): 14,2 (CH₃) , 23,0, 25, 8, 27,9, 28,9, 29,5, 29, 7, 29,8 , 29,9, 32,2 (CH₂), 43,2, 44,2 (CH, 2 Isomere), 75,7, 76,3 (C-O, 2 Isomere), 126,4, 126,7, 126,9, 127,4, 127,5, 127,8, 128,2, 128,4, 128,5, 128,6, 128,8, 129,3, 129,6 (C-Phenyl, 2 Isomere)

### I.a.7

Ausbeute: 62 %, Summenformel : C₁₉H₂₀Cl₃NO₃Zr, Farbe: gelborange
¹H-NMR (CD₂Cl₂): 1,37 (3H, s, CH₃), 1,72 (3H, s, CH₃), 1,81 (s, 2 x CH₂, koordinierendes THF), 3,65 (s, 2 x CH₂-O, koordinierendes THF), 3,76, 3,87 (6H, 2 x s, 2 x CH₃-O), 6,81 - 7,83 (m, Phenyl)

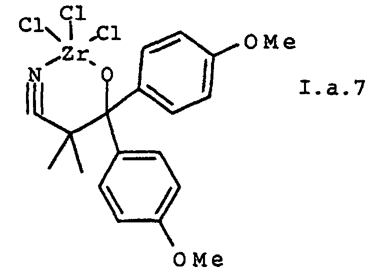

### Komplex I.b.2

Abweichend von der allgemeinen Vorschrift wurde der Rückstand nach Abdestillieren des THF mit CH₂Cl₂ und mit Hexan gewaschen.

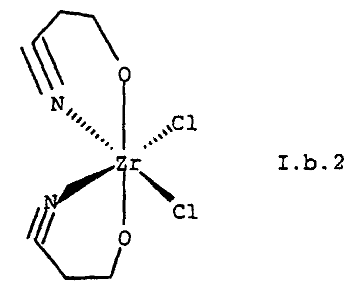

Ausbeute: 53 %, Summenformel: C₆H₈Cl₂N₂O₂Zr, Farbe: hellgelb
¹H-NMR (CD₂Cl₂): 1,81 (m, CH₂, koordinierendes THF), 2,57 (t, CH₂), 3,67 (m, CH₂-O, koordinierendes THF), 3,84 (m, CH₂-O)

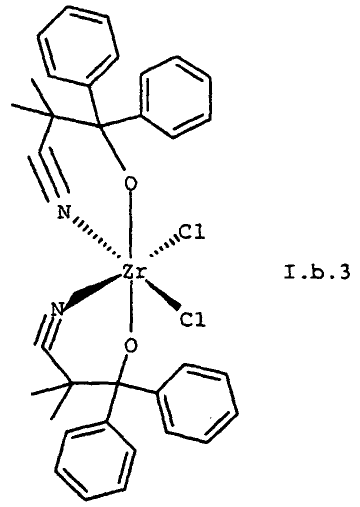

### Komplex I.b.3

Ausbeute: 76 %, Summenformel: C₃₄H₃₂C₁₂N₂O₂Zr, Farbe: weiß
¹H NMR (CD₂Cl₂): 1,27, 1,48 (12H, 4 x CH₃) , 1,79 (4H, s, 2 x CH₂, 1 koordinierendes THF), 3,72 (4H, s, 2 x CH₂-O, 1 koordinierendes THF), 7,21 - 7,80 (20H, m, aromatisch)

**Tabelle 2:**

| Übersicht über Komplexe der Formel I a und I b | | | | | | | | |
|---|---|---|---|---|---|---|---|---|
| Komplex | R¹ | R² | R³ | R⁴ | R⁵ | M | X | Nu |
| I.a.1 | H | H | Ph | Ph | - | Zr | Cl | O |
| I.a.2 | H | H | H | H | - | Zr | Cl | O |
| I.a.3 | H | H | H | H | -C₂H₄ CN | Zr | Cl | N |
| I.a.4 | Me | Me | Ph | Ph | - | Zr | Cl | O |
| I.a.5 | -(CH₂)₅- | | Ph | Ph | - | Zr | Cl | O |
| I.a.6 | H | n-C₁₀ H₂₁ | Ph | Ph | - | Zr | Cl | N |
| I.a.7 | Me | Me | p-An | p-An | - | Zr | Cl | O |
| I.b.1 | H | H | Ph | Ph | - | Zr | Cl | O |
| I.b.2 | H | H | H | H | - | Zr | Cl | O |
| I . b . 3 | Me | Me | Ph | Ph | - | Zr | Cl | O |
| Abkürzungen: Me = CH₃, Ph = Phenyl, -C₂H₄CN: β-Cyanoethyl, p-An: Para-Anisyl. | | | | | | | | |

### 3. Polymerisationsexperimente

### 3.1. Drucklose Polymerisation

In einem inertisierten Schlenkrohr wurde eine Lösung von 20 mg des zu untersuchenden Komplexes, 1 ml Gew.-30%ige MAO-Lösung (in Toluol) und 50 ml Toluol hergestellt. Dieses Reaktionsgemisch wurde, falls nicht anders vermerkt, bei Zimmertemperatur für 90 min unter einer Ethylenatmosphäre gerührt. Es wurde vom ausgefallenen weißen Feststoff abfiltriert, der Feststoff mit Methanol gewaschen und im Vakuum getrocknet. Man erhielt das Polymer in Form eines weißen Pulvers.

### 3.2. Polymerisation im Autoklaven

In einen inertisierten 1-1-Stahlautoklaven wurden 20 mg des zu untersuchenden Komplexes, 2 ml 30 Gew.-%ige MAO-Lösung in Toluol und 400 ml Toluol gegeben. Bei 70°C wurde Ethylen bis zu einem Druck von 40 bar aufgepresst. Dieser Druck wird durch Nachdosieren von Ethylen über die Versuchsdauer von 90 min konstant gehalten. Die Reaktion wurde durch Entspannen abgebrochen und das Polymer durch Filtration, anschließendes Waschen mit Methanol und Trocken im Vakuum isoliert.

### 3.3 Ethylen-Hexen-Copolymerisation

Es wurde wie unter 3.2 verfahren, aber zu Beginn wurden mit den anderen Reagenzien 20 ml 1-Hexen in den Autoklaven gegeben.

### 3.4. Polymerisation mit Wasserstoff als Molmassenregler

Es wird wie unter 3.2 verfahren, aber zu Beginn werden 4 I Wasserstoff (unter Normalbedingungen )in den Autoklaven dosiert.

Die Ergebnisse sind in Tabelle 3 zusammengefasst.

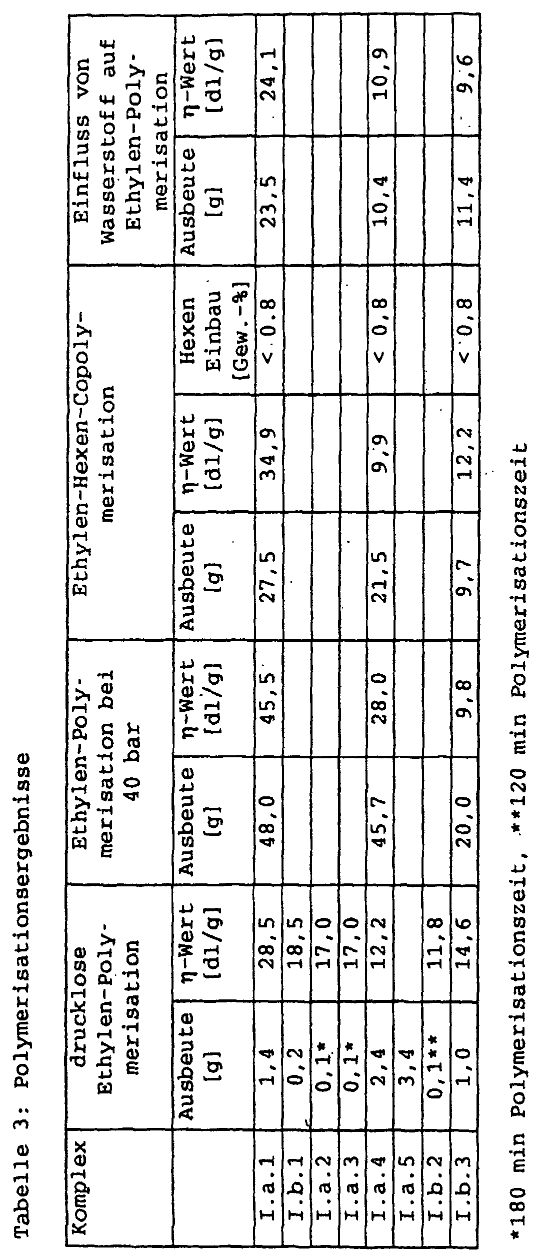

## Patentansprüche

1. Komplexverbindungen der allgemeinen Formel I a bis b, 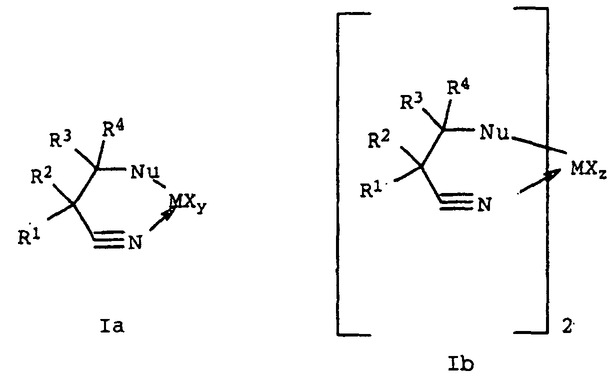 bei denen die Variablen wir folgt definiert sind:
M ausgewählt aus Ti, Zr, Hf, V, Nb oder Ta;
y entspricht der Oxidationsstufe von M abzüglich 1;
z entspricht der Oxidationsstufe von M abzüglich 2;
Nu ausgewählt aus O, S oder N-R⁵;
X gleich oder verschieden und ausgewählt aus Halogen, C₁-C₈-Alkyl, C₃-C₁₂-Cycloalkyl, C₇-C₁₃-Aralkyl oder C₆-C₁₄-Aryl,
R¹ bis R⁵ gleich oder verschieden und ausgewählt aus Wasserstoff,
C₁-C₁₈-Alkyl, substituiert oder unsubstituiert,
C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert;
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁶R⁷R⁸ oder O-SiR⁶R⁷R⁸;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁶R⁷R⁸ oder O-SiR⁶R⁷R⁸;
wobei räumlich benachbarte Reste R¹ bis R⁴ miteinander zu einem 5- bis 12-gliedrigen Ring verbunden sein können, der seinerseits Substituenten tragen kann, die ausgewählt sind. aus C₁-C₈-Alkyl, substituiert oder unsubstituiert,
C₂-C₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl oder C₆-C₁₄-Aryl;
R⁶ bis R⁸ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

2. Komplexverbindungen gemäß Anspruch 1, **dadurch gekennzeichnet, dass** Nu Sauerstoff ist, M aus Ti und Zr gewählt wird, X Halogen ist und dass mindestens ein Rest R¹ bis R⁴ ungleich Wasserstoff ist.

3. Verfahren zur Polymerisation oder Copolymerisation von Olefinen unter Verwendung von einer oder mehrerer Komplexverbindungen der allgemeinen Formel I a oder I b nach Anspruch 1 oder 2.

4. Verfahren zur Herstellung von Komplexverbindungen gemäß Anspruch 1 oder 2, **dadurch gekennzeichnet, dass** man einen Liganden der allgemeinen Formel II 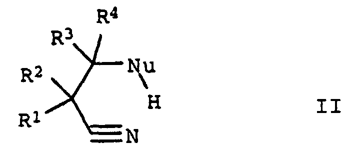 zunächst mit Hilfe einer Base deprotoniert und anschließend mit einer Metallverbindung MX_{y+1} umsetzt, wobei M ausgewählt ist aus Ti, Zr, Hf oder V und X Halogen, C₁-C₈-Alkyl,
C₃-C₁₂-Cycloalkyl, C₇-C₁₃-Aralkyl oder C₆-C₁₄-Aryl bedeutet und wobei MX_{y+1} optional durch zusätzliche Neutralliganden stabilisiert werden kann.

5. Verfahren zur Herstellung eines Trägerkatalysators für die Polymerisation oder Copolymerisation von Olefinen, **dadurch gekennzeichnet, dass** man eine oder mehrere Komplexverbindungen nach Anspruch 1 oder 2 und optional einen Aktivator auf einem festen Träger abscheidet.

6. Trägerkatalysator für die Polymerisation oder Copolymerisation von Olefinen erhältlich nach einem Verfahren nach Anspruch 5.

7. Verfahren zur Polymerisation oder Copolymerisation von Olefinen unter Verwendung eines Trägerkatalysators gemäß Anspruch 6.

## Claims

1. A complex of the formula I a or I b, 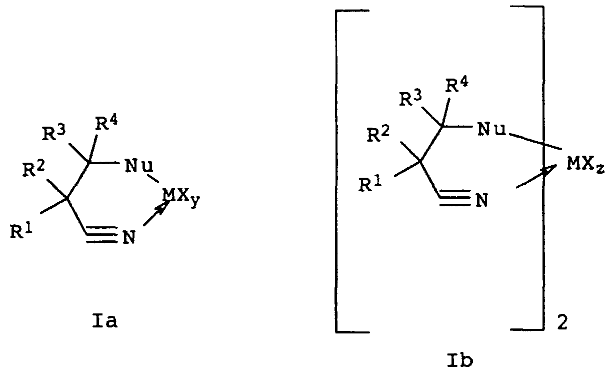 where the variables are defined as follows:
M is selected from among Ti, Zr, Hf, v, Nb and Ta;
y corresponds to the oxidation state of M minus 1;
z corresponds to the oxidation state of M minus 2;
Nu is selected from among O, S and N-R⁵;
X are identical or different and are selected from among halogen, C₁-C₈-alkyl, C₃-C₁₂-cycloalkyl, C₇-C₁₃-aralkyl and C₆-C₁₄-aryl,
R¹ to R⁵ are identical or different and are selected from among
hydrogen,
C₁-C₁₈-alkyl, substituted or unsubstituted,
C₂-C₁₈-alkenyl, substituted or unsubstituted, having from one to 4 isolated or conjugated double bonds;
C₃-C₁₂-cycloalkyl, substituted or unsubstituted,
C₇-C₁₃-aralkyl,
C₆-C₁₄-aryl, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy, substituted or unsubstituted,
C₆-C₁₄-aryloxy,
SiR⁶R⁷R⁸ and O-SiR⁶R⁷R⁸;
five- and six-membered nitrogen-containing heteroaryl radicals, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁶R⁷R⁸ and O-SiR⁶R⁷R⁸;
where adjacent radicals R¹ to R⁴ may be joined to one another to form a 5- to 12-membered ring which may in turn bear substituents selected from among C₁-C₈-alkyl, substituted or unsubstituted, C₂-C₈-alkenyl, substituted or unsubstituted and having from one to 4 isolated or conjugated double bonds, C₃-C₁₂-cycloalkyl, substituted or unsubstituted, C₇-C₁₃-aralkyl and C₆-C₁₄-aryl;
R⁶ to R⁸ are identical or different and are selected from among hydrogen, C₁-C₈-alkyl, C₃-C₁₂-cycloalkyl, C₇-C₁₃-aralkyl and C₆-C₁₄-aryl.

2. A complex as claimed in claim 1, wherein Nu is oxygen, M is selected from among Ti and Zr, X is halogen and at least one radical R¹ to R⁴ is different from hydrogen.

3. A process for the polymerization or copolymerization of olefins using one or more complexes of the formula I a or I b as claimed in claim 1 or 2.

4. A process for preparing a complex as claimed in claim 1 or 2, which comprises firstly deprotonating a ligand of the formula II 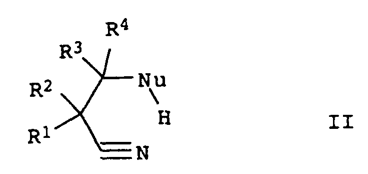 by means of a base and subsequently reacting the product with a metal compound MX_{y+1}, where M is selected from among Ti, Zr, Hf or V, and X is halogen, C₁-C₈-alkyl, C₃-C₁₂-cycloalkyl, C₇-C₁₃-aralkyl or C₆-C₁₄-aryl, where MX_{y+1} may optionally be stabilized by additional uncharged ligands.

5. A process for preparing a supported catalyst for the polymerization or copolymerization of olefins, which comprises depositing one or more complexes as claimed in claim 1 or 2 and optionally an activator on a solid support.

6. A supported catalyst for the polymerization or copolymerization of olefins which is obtainable by a process as claimed in claim 5.

7. A process for the polymerization or copolymerization of olefins using a supported catalyst as claimed in claim 6.

## Revendications

1. Composés complexes de formule générale Ia à Ib 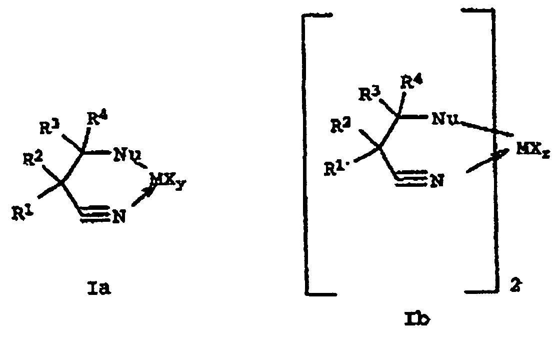 dans lesquelles les variables sont définies comme suit :
M est choisi parmi Ti, Zr, Hf, V, Nb ou Ta ;
y représente le degré d'oxydation de M moins 1 ;
z représente le degré d'oxydation de M moins 2 ;
Nu est choisi parmi O, S ou N-R⁵ ;
les X sont identiques ou différents et sont choisis parmi un atome d'halogène, un groupe alkyle en C₁ à C₈, cycloalkyle en C₃ à C₁₂, aralkyle en C₇ à C₁₃ ou aryle en C₆ à C₁₄ ;
R¹ à R⁵ sont identiques ou différents et sont choisis parmi un atome d'hydrogène,
un groupe alkyle en C₁ à C₁₈, substitué ou non substitué,
un groupe alcényle en C₂ à C₁₈, substitué ou non substitué, contenant 1 à 4 doubles liaisons isolées ou conjuguées,
un groupe cycloalkyle en C₃ à C₁₂, substitué ou non substitué,
un groupe aralkyle en C₇ à C₁₃,
un groupe aryle en C₆ à C₁₄, non substitué ou substitué
une ou plusieurs fois de manière identique ou différente par
un groupe alkyle en C₁ à C₁₈, substitué ou non substitué,
un groupe alcényle en C₂ à C₁₈, substitué ou non substitué,
un groupe cycloalkyle en C₃ à C₁₂,
un groupe aralkyle en C₇ à C₁₃,
un groupe aryle en C₆ à C₁₄,
un atome d'halogène,
un groupe alcoxy en C₁ à C₆, substitué ou non substitué,
un groupe aryloxy en C₆ à C₁₄,
SiR⁶R⁷R⁸ ou O-SiR⁶R⁷R⁸;
des groupes hétéroaryle de cinq à six éléments contenant de l'azote, non substitués ou substitués une ou plusieurs fois de manière identique ou différente par
un groupe alkyle en C₁ à C₁₈, substitué ou non substitué,
un groupe alcényle en C₂ à C₁₈, substitué ou non substitué,
un groupe cycloalkyle en C₃ à C₁₂,
un groupe aralkyle en C₇ à C₁₃,
un groupe aryle en C₆ à C₁₄,
un atome d'halogène,
un groupe alcoxy en C₁ à C₆, substitué ou non substitué,
un groupe aryloxy en C₆ à C₁₄,
SiR⁶R⁷R⁸ ou O-SiR⁶R⁷R⁸ ;
où les groupes R¹ à R⁴ vicinaux peuvent être reliés les uns aux autres pour former un cycle de 5 à 12 éléments qui peut à son tour porter des substituants qui sont choisis parmi un groupe alkyle en C₁ à C₈, substitué ou non substitué, un groupe alcényle en C₂ à C₈, substitué ou non substitué et contenant 1 à 4 doubles liaisons isolées ou conjuguées, un groupe cycloalkyle en C₃ à C₁₂, substitué ou non substitué, un groupe aralkyle en C₇ à C₁₃ ou aryle en C₆ à C₁₄ ;
R⁶ à R⁸ sont identiques ou différents et sont choisis parmi un atome d'hydrogène, un groupe alkyle en C₁ à C₈, cycloalkyle en C₃ à C₁₂, aralkyle en C₇ à C₁₃ ou aryle en C₆ à C₁₄.

2. Composés complexes selon la revendication 1, **caractérisés en ce que** Nu représente un atome d'oxygène, M est choisi parmi Ti et Zr, X représente un atome d'halogène et **en ce qu'**au moins un groupe R¹ à R⁴ est différent d'un atome d'hydrogène.

3. Procédé de polymérisation ou de copolymérisation d'oléfines utilisant un ou plusieurs composés complexes de formule générale la ou Ib selon la revendication 1 ou 2.

4. Procédé de préparation de composés complexes selon la revendication 1 ou 2, **caractérisé en ce que** l'on déprotone d'abord un ligand de formule générale II 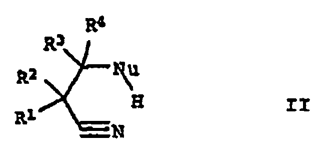 à l'aide d'une base et qu'on le fait ensuite réagir avec un composé métallique MX_{y+1}, dans lequel M est choisi parmi Ti, Zr, Hf ou V et X représente un atome d'halogène, un groupe alkyle en C₁ à C₈, cycloalkyle en C₃ à C₁₂, aralkyle en C₇ à C₁₃ ou aryle en C₆ à C₁₄, MX_{y+1} pouvant être éventuellement stabilisé par des ligands neutres supplémentaires.

5. Procédé de préparation d'un catalyseur supporté pour la polymérisation ou la copolymérisation d'oléfines, **caractérisé en ce que** l'on dépose un ou plusieurs composés complexes selon la revendication 1 ou 2 et éventuellement un activateur sur un support solide.

6. Catalyseur supporté pour la polymérisation ou la copolymérisation d'oléfines pouvant être obtenu selon un procédé selon la revendication 5.

7. Procédé de polymérisation ou de copolymérisation d'oléfines utilisant un catalyseur supporté selon la revendication 6.
